# EUROPEAN PATENT APPLICATION

(11) **EP 4 420 912 A1**
(43) Date of publication of application: **28.08.2024**
(21) Application number: 23158414.5
(22) Date of filing: 24.02.2023
(51) Int. Cl.: B60K 35/00, B60K 37/06

(54) **CONTROL DEVICE FOR ASSISTING A STRETCHING EXERCISE OF A PASSENGER OF A VEHICLE USING LIGHT AS VISUAL AID, SYSTEM, VEHICLE, METHOD AND COMPUTER PROGRAM AND/OR COMPUTER-READABLE STORAGE MEDIUM**

(71) Applicant: Bayerische Motoren Werke Aktiengesellschaft, 80809 München (DE)
(72) Inventor: Zaki, Tarek, 81829 München (DE)

(57) **Abstract**

A control device (2) for assisting a stretching exercise of a passenger of a vehicle (10) using light as visual aid is provided. The control device (2) is configured to control (S1) a lighting device (3) to sequentially illuminate each of multiple predefined locations in a predefined lighting sequence, determine (S2) a stretching movement of the passenger towards one of the predefined locations currently illuminated while each of the multiple predefined locations are sequentially illuminated in the predefined lighting sequence, determine (S3) whether the determined stretching movement fulfils a predefined condition, and control (S4) a feedback device (4) to provide a visual, haptic and/or audio feedback to the passenger, if the predefined condition is fulfilled.

## Description

The present disclosure relates to a control device for assisting a stretching exercise of a passenger of a vehicle using light as visual aid, a system comprising the control device, a vehicle comprising the control device or the system, and/or a method for assisting a stretching exercise of a passenger of a vehicle using light as visual aid. Additionally, or alternatively, the present disclosure relates to a computer program and/or a computer-readable medium comprising instructions which, when executed by a computer, cause the computer to at least partially carry out the method.

Driving, in particular long driving, can be stressful, wherein the driving posture and the way a passenger sits in the vehicle can contribute to neck, back and shoulder pain.

Document DE 10 2019 218 592 A1 discloses a system for carrying out occupational and/or physiotherapeutic measures in a vehicle and a corresponding vehicle. The system comprises a system-internal and/or vehicle-internal audiovisual interaction unit, which is designed to provide and reproduce an exercise program with at least one exercise unit, which can be stored on a system-internal control and computing unit, to a vehicle occupant. The control and computing unit can be coupled to at least one adjustable component of the vehicle that physically interacts with the vehicle occupant.

Document WO 2020/160334 A1 discloses a sensor fusion system associated with a vehicle, including a sensor interface communicatively coupled to a plurality of sensors in the vehicle and a vehicle experience system. The sensor interface comprises an input receiving data from each of the plurality of sensors and an output configured to output fused vehicle data based on the data received from the plurality of sensors. The vehicle experience system is coupled to the output of the sensors interface to receive the fused vehicle data. The vehicle experience system includes one or more processors and a non-transitory computer readable storage medium storing instructions that, when executed by one or more processors, cause the one or more processors to control at least one parameter of the vehicle based on the fused vehicle data.

Document DE 10 2017 213 998 A1 discloses a method for guiding a physiological exercise for a user of a motor vehicle. The method comprises detecting a physiological parameter of the user, driving a first light source of the motor vehicle in such a way that the physiological parameter is visualized by it, selecting the physiological exercise for the user, and controlling a second light source of the motor vehicle such that the instructions for the physiological exercise is visualized by it.

In view of this prior art, the object of the present disclosure is to disclose a device and/or a method, each of which is suitable for enriching the prior art.

The object is solved by the features of the independent claims. The dependent claims provide optional further implementations of the disclosure.

Accordingly, the object is solved by a control device for assisting a stretching exercise of a passenger of a vehicle using light as visual aid.

The control device is configured to control a lighting device to sequentially illuminate each of multiple predefined locations in a predefined lighting sequence.

The control device is configured to determine a stretching movement of the passenger towards one of the predefined locations currently illuminated while each of the multiple predefined locations are sequentially illuminated in the predefined lighting sequence.

The control device is configured to determine whether the determined stretching movement fulfils a predefined condition.

The control device is configured to control a feedback device to provide a visual, haptic and/or audio feedback to the passenger, if the predefined condition is fulfilled.

The control device or control unit may be part of or represent a driving assistance system. The control device may be, e.g., an electronic control unit (ECU). The electronic control unit may be an intelligent processor-controlled unit which can communicate with other modules, e.g., via a central gateway (CGW), and which, if necessary, may form (part of) the vehicle electrical system via field buses such as the CAN bus, LIN bus, MOST bus, FlexRay and/or via the automotive Ethernet, e.g., together with telematics control units and/or an environment sensor system.

It is possible that the control device controls functions relevant to the driving behavior of the (motor) vehicle, such as the steering, the engine control, the power transmission, and/or the braking system. In addition, driver assistance systems such as a parking assistant, adaptive cruise control (ACC), lane departure warning, lane change assistant, traffic sign recognition, light signal recognition, approach assistant, night vision assistant, and/or intersection assistant may be controlled by the control device.

A stretching exercise relates to a form of physical exercise in which a body part (of the passenger) is moved and/or stretched out in various directions, thereby deliberately flexing or stretching specific muscles and/or tendons. The stretching exercise may improve the muscles' felt elasticity and achieve comfortable muscle tone. Additionally, the stretching exercise may be used therapeutically to alleviate cramps and to improve function in daily activities by increasing range of motion.

In the stretching exercise according to the disclosure, the passenger may perform stretching movements by (e.g., alternately) moving and/or stretching out body parts in correspondence with the predefined lighting sequence. The passenger may move and/or stretch out a body part towards the one of the predefined locations currently illuminated. The body parts may be in particular the passenger's head (e.g., for stretching muscles in the passenger's neck), arm(s) and/or shoulder(s).

Additionally, the stretching exercise may be provided as a game or in connection with a game, wherein, e.g., the feedback may provide a score which may be increased if the determined stretching movement has fulfilled the predefined condition.

For instance, the passenger may stretch out the passenger's left arm towards a first of the predefined locations currently illuminated (while the other predefined locations are currently not illuminated), and then may stretch out the passenger's right arm towards a second of the predefined locations currently illuminated (while the other predefined locations are currently not illuminated).

The predefined lighting sequence may define an order of the multiple predefined locations to be sequentially illuminated. The predefined lighting sequence may define that only one of the multiple defined locations at a time may be illuminated. For instance, the predefined lighting sequence may start with a first of the predefined locations being illuminated while the other predefined locations are not illuminated, then continue with the second of the predefined locations being illuminated while the other predefined locations are not illuminated, etc.. Data defining the predefined lighting sequence may be stored in a storage of the control device.

The predefined locations may be illuminated by light units (e.g., light spots and/or LED units) being arranged at each of the predefined locations. Alternatively, or additionally, the predefined locations may be illuminated by being spotlighted, e.g., by a light projection produced by a light unit such as a laser.

The feedback may be provided almost instantly, e.g., within 1, 2 or 5 seconds, after the stretching movement has been determined and after it has been determined that the predefined condition is fulfilled. The feedback may be provided such that the passenger may recognize that the previous stretching movement has been performed correctly.

The control device described above provides the advantage of, among other things, offering vehicle users, optionally passenger(s) and/or driver(s), a stretching exercise gadget that helps to alleviate issues, such as neck, back and shoulder pain which have resulted from a driving posture, in particular a sitting position, while driving. Additionally, the present disclosure provides an easy to implement technique using light as visual aid, wherein feedback is provided as further aid to indicate whether the intended stretching exercise is performed correctly by the passenger.

Possible further implementations of the control device described herein are explained in detail below.

The control device may be configured to determine the stretching movement by receiving, from at least one sensor, data regarding a measurement of a distance between a body part of the passenger and the one of the predefined locations currently illuminated by the lighting device. The predefined condition may be fulfilled if a value of the (measured) distance is smaller than a predefined distance value.

The control device may comprise a function and/or an algorithm for extracting the value of the (measured) distance from the received data. The control device may be configured to compare the value of the (measured) distance with the predefined distance value in order to determine whether the predefined condition is fulfilled. The predefined condition and/or the predefined distance value may be stored in the storage of the control device.

The control device may be configured to determine the stretching movement by receiving, from at least one camera, a recording of a head, face, shoulder and/or back movement of the passenger. The predefined condition may be fulfilled if the recorded head, face, shoulder and/or back movement corresponds to a movement towards the one of the predefined locations currently illuminated by the lighting device.

The control device may be configured to perform image processing. The control device may comprise a function, an algorithm and/or a (image processing) software for determining if the recorded head, face, shoulder and/or back movement corresponds to a movement towards the one of the predefined locations currently illuminated by the lighting device.

For instance, image processing of multiple frames of the recording may be performed to determine whether the head, face, shoulder and/or back has been moved towards the one of the predefined locations currently illuminated by the lighting device. It may be possible that a distance between the head, face, shoulder and/or back and the one of the predefined locations currently illuminated by the lighting device may be determined for each frame in order to determine whether the distance decreases with passing time.

The control device may be configured to determine the stretching movement by receiving, from a seatbelt sensor, data regarding a measurement of a pull force (or push force) of a seatbelt while one of the predefined locations is (currently) illuminated by the lighting device. The predefined condition may be fulfilled if a value of the measured pull force (or push force) is higher than a predefined force value.

The control device may comprise a function and/or an algorithm for extracting the value of the measured pull force (or push force) from the received data. The control device may be configured to compare the value of the measured pull force (or push force) with the predefined force value in order to determine whether the predefined condition is fulfilled. The predefined condition and/or the predefined force value may be stored in the storage of the control device.

The control device may be further configured to control at least one display to illustrate stretching movements to the passenger simultaneously to each of the multiple predefined locations being sequentially illuminated in the predefined lighting sequence. The at least one display may illustrate a body part to be stretched and/or a direction towards the one of the predefined locations currently illuminated by the lighting device. Advantageously, the at least one display provides an additional visual aid to the passenger for performing the stretching exercise.

The foregoing may be summarized in other words and with respect to a possible more specific implementations of the disclosure as described below, wherein the following description is to be construed as not being limiting to the disclosure.

Together with visual aid from in-car displays, the disclosure may use in-cabin light spots and light projections to guide the user to follow a certain advisable movement pattern by body parts, as well as to track the motion by time-of-flight sensors (at the vicinity of these light spots) and in-cabin cameras to give the user feedback of a successful exercise.

The in-car entertainment displays, such as central information display, heads-up display, co-driver or rear-seat displays, may be used to illustrate a certain movement to the user.

Furthermore, using LED lights at the vicinity of every user may guide the locations at which the user needs to reach. For example, a rear-seat passenger may see consecutive light pattern at the roof to be followed by the palm for stretching arm and shoulder body parts.

The LED lights may have different shapes and/or color to differentiate, e.g., between right and left arm. The hardware of the LED lights may not necessarily be visible to the user. The LED may be mounted behind textile or plastic that makes them only visible when light is emitted.

In another constellation, light projections (e.g., by a laser) on dashboard, floor, etc., may be used to guide the user to follow a certain movement. Again, the projected light may have different shape and/or color to differentiate between intended body parts.

To enrich the experience more, the user may be given feedback to indicate a successful movement. This feedback may be haptic by subtle vibration in the seat or on surfaces, visual by green check on the display, or audible by a praise told by the voice assistant.

In order to identify if the movement was correctly followed two or more types of sensors may be used. Time-of-flight sensors may be located at the vicinity of the LED spots and/or projected lights to measure the distance of the user's body part to the intended location. In-cabin cameras may be used to record specific head, face, shoulder or back movements. A sensor that detects significant change in the seatbelt's pull/push force may be used.

The same idea may be also implemented for outdoor activity at the vicinity of the motor vehicle. For example, after a long ride, the user may be guided by light projections (commonly known in the industry by car light carpets) on the pavement to follow a certain stretching exercise. The exterior cameras as well as time of flight sensors may be used to identify if the movement was correctly followed by the user at the exterior of the motor vehicle.

Furthermore, a system comprising the control device described herein is provided.

The system comprises a lighting device configured to sequentially illuminate each of the multiple predefined locations in a predefined lighting sequence.

The system comprises a feedback device for providing a visual, haptic and/or audio feedback to the passenger.

The feedback device may be arranged to provide haptic feedback, such as a (subtle) vibration, in a vehicle seat or on a surface inside the cabin of the vehicle.

The feedback device may be configured to control at least one display, such as the at least one display described below, to display visual feedback, e.g., a green check mark.

The feedback device may be configured to control at least one speaker to provide audio feedback, such as a praise told by a voice assistant. The at least one speaker may be arranged inside the cabin of the vehicle.

The lighting device may comprise LED units (and/or light spots), each of which arranged at one of the predefined locations.

The LED units may have different shapes and/or colors for indicating different body parts (e.g., the left arm or the right arm) to be stretched by the passenger.

The LED units may be mounted behind translucent textile and/or translucent plastic. Each of the LED units may be only visible when it is illuminated (e.g., light is emitted).

The LED units may be arranged inside the cabin of the vehicle. The LED units may be arranged at a vicinity of one or more vehicle seats. The LED units may be arranged at a ceiling inside the cabin, e.g., above a driver, co-driver and/or rear seat.

The lighting device may comprise at least one light projection unit configured to produce light projections to sequentially illuminate each of the multiple predefined locations in the predefined lighting sequence. The at least one light projection unit may be or comprise a laser. The laser may be configured to produce light projections.

The light projections may be used to guide the passenger to follow a predefined movement. The light projections may have different shapes and/or colors for indicating different body parts to be stretched by the passenger.

The light projections may be produced on a dashboard, a floor, a window and/or a ceiling inside the cabin of the vehicle. The lighting device may be arranged inside the cabin.

The system may comprise at least one sensor configured to measure a distance between a body part of the passenger and the one of the predefined locations currently illuminated by the lighting device. The at least one sensor may be at least one time-of-flight sensor.

The at least one sensor may comprise multiple sensors. Each of the multiple sensors may be arranged at (e.g., at a vicinity of) one of the predefined locations. For example, the multiples sensors and the LED units may be arranged as pairs, each comprising a sensor and a LED unit.

The system may comprise at least one camera configured to record a head, face, shoulder and/or back movement of the passenger. The at least one camera may be arranged such that the head, face, shoulder and/or back of the passenger and the one of the predefined locations currently illuminated by the lighting device may be recorded at the same time, in particular in the same frame.

The at least one sensor and/or the at least one camera may be arranged inside the cabin of the vehicle.

The system may comprise at least one a seatbelt sensor configured to measure a pull force (or push force) of a seatbelt while the one of the predefined locations is (currently) illuminated by the lighting device. The at least one seatbelt may be a seatbelt of a vehicle seat inside the cabin of the vehicle.

It may be also possible to implement the system at an exterior of the vehicle. For example, the at least one light projection unit may be arranged to produce light projections outside of the cabin and/or on a pavement surrounding the vehicle. The at least one sensor and/or the at least one camera may be arranged at the exterior of the vehicle.

The at least one light projection unit may be arranged to produce light projections to provide a game instead of or in connection with the stretching exercise. For instance, the at least one light projection unit may be arranged to produce light projections for providing a game, such as hopscotch and/or twister, on the pavement surrounding the vehicle.

The system may comprise at least one display. The at least one display may be configured to illustrate stretching movements to the passenger simultaneously to each of the multiple predefined locations being sequentially illuminated in the predefined lighting sequence. The at least one display may be or comprise an in-car entertainment display, a central information display, a heads-up display, a co-driver and/or a rear-seat display.

What is described herein with respect to the control device also applies analogously to the system and vice versa.

Furthermore, a vehicle comprising the control device or the system described herein is provided.

The vehicle may be a motor vehicle. The vehicle may be a passenger car, especially an automobile, or a commercial vehicle, such as a truck.

What is described herein with respect to the control device and the system also applies analogously to the motor vehicle and vice versa.

Furthermore, a method for assisting a stretching exercise of a passenger of a vehicle using light as visual aid is provided.

The method comprises controlling a lighting device to sequentially illuminate each of multiple predefined locations in a predefined lighting sequence.

The method comprises determining a stretching movement of the passenger towards one of the predefined locations currently illuminated while each of the multiple predefined locations are sequentially illuminated in the predefined lighting sequence;

The method comprises determining whether the determined stretching movement fulfils a predefined condition.

The method comprises controlling a feedback device to provide a visual, haptic and/or audio feedback to the passenger, if the predefined condition is fulfilled.

The method may be a computer-implemented method, i.e., one, several or all steps of the method may be executed at least partially by a computer or a device for data processing, optionally the control device.

What is described herein with respect to the control device, the system and the vehicle applies analogously to the method and vice versa.

Furthermore, a computer program is provided. A computer program comprises instructions which, when the computer program is executed by a computer, cause the computer to at least partially execute the method described herein.

A program code of the computer program may be in any code, especially in a code suitable for control systems of motor vehicles.

What is described herein with respect to the control device, the system, the vehicle and the method applies analogously to the computer program and vice versa.

Furthermore, a computer-readable medium, in particular a computer-readable storage medium, is provided. The computer-readable medium comprises instructions which, when the instructions are executed by a computer, cause the computer to at least partially execute or perform the method described herein.

Thus, a computer-readable medium comprising a computer program as defined herein may be provided. The computer-readable medium may be any digital data storage device, such as a USB flash drive, a hard disk, a CD-ROM, an SD card, or an SSD card (or SSD drive/SSD hard disk).

The computer program does not necessarily have to be stored on such a computer-readable storage medium in order to be made available to the vehicle, but may also be obtained externally via the Internet or otherwise.

What is described herein with respect to the method, the control device, the system, the computer program and the vehicle also applies analogously to the computer-readable medium and vice versa.

Optional embodiments are described below with reference to Figs. 1, 2 and 3.
- Fig. 1: shows a schematic overview of a vehicle according to an embodiment of the disclosure;
- Fig. 2: shows a schematic overview of a vehicle according to another embodiment of the disclosure; and
- Fig. 3: shows a schematic flow diagram of a method according to an embodiment of the disclosure.

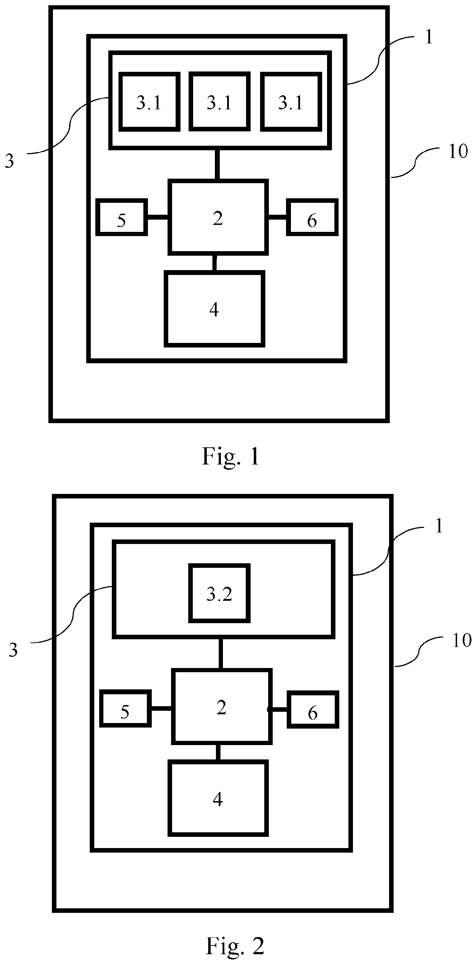

The vehicle 10, which is only schematically shown in Figs. 1 and 2, comprises a system 1.

The system 1 comprises a control device 2, a lighting device 3 configured to sequentially illuminate each of the multiple predefined locations in a predefined lighting sequence, and a feedback device 4 for providing a visual, haptic and/or audio feedback to the passenger.

The lighting device 3, which is shown in Fig. 1, comprises multiple LED units 3.1, each of which arranged at one of the predefined locations.

The LED units 3.1 may have different shapes and/or colors for indicating different body parts to be stretched by the passenger. The LED units 3.1 may be mounted behind translucent textile and/or translucent plastic.

The lighting device 3, which is shown in Fig. 2, comprises at least one light projection unit 3.2 configured to produce light projections to sequentially illuminate each of the multiple predefined locations in the predefined lighting sequence.

It is also possible that the lighting device 3 comprises the LED units 3.1 and the at least one light projection unit 3.2.

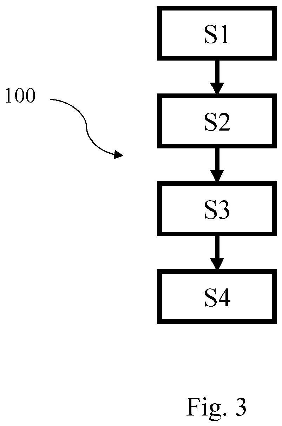

The control device 2 is configured to assist a stretching exercise of a passenger of the vehicle 10 using light as visual aid. The control device 2 is designed to execute the (control) method described below in detail with reference to Fig. 3.

In a first step S1, the lighting device 3 is controlled to sequentially illuminate each of multiple predefined locations in a predefined lighting sequence.

In a second step S2, a stretching movement of the passenger towards one of the predefined locations currently illuminated while each of the multiple predefined locations are sequentially illuminated in the predefined lighting sequence is determined.

The stretching movement may be determined by receiving, from the at least one sensor 5, data regarding a measurement of a distance between a body part of the passenger and the one of the predefined locations currently illuminated by the lighting device 3.

Alternatively, or additionally, the stretching movement may be determined by receiving, from the at least one camera 6, a recording of a head, face, shoulder and/or back movement of the passenger.

In a third step S3, it is determined whether the determined stretching movement fulfils a predefined condition.

The predefined condition may be fulfilled if a value of the distance between the body part of the passenger and the one of the predefined locations currently illuminated by the lighting device 3 is smaller than a predefined distance value.

Alternatively, or additionally, the predefined condition may be fulfilled if the recorded head, face, shoulder and/or back movement corresponds to a movement towards the one of the predefined locations currently illuminated by the lighting device.

In a fourth step S4, the feedback device 4 is controlled to provide a visual, haptic and/or audio feedback to the passenger, if the predefined condition is fulfilled.

It is further possible that the at least one display 7 is controlled to illustrate stretching movements to the passenger simultaneously to each of the multiple predefined locations being sequentially illuminated in the predefined lighting sequence.

### List of reference signs

- 1: system
- 2: control device
- 3: lighting device
- 3.1: LED units
- 3.2: light projection unit
- 4: feedback device
- 5: sensor
- 6: camera
- 7: display
- 10: vehicle
- 100: method
- S1-S4: method steps

## Claims

1. Control device (2) for assisting a stretching exercise of a passenger of a vehicle (10) using light as visual aid, **characterized in that** the control device (2) is configured to:
- control (S1) a lighting device (3) to sequentially illuminate each of multiple predefined locations in a predefined lighting sequence;
- determine (S2) a stretching movement of the passenger towards one of the predefined locations currently illuminated while each of the multiple predefined locations are sequentially illuminated in the predefined lighting sequence;
- determine (S3) whether the determined stretching movement fulfils a predefined condition; and
- control (S4) a feedback device (4) to provide a visual, haptic and/or audio feedback to the passenger, if the predefined condition is fulfilled.

2. Control device (2) according to claim 1, **characterized in that** the control device (2) is configured to determine the stretching movement by receiving, from at least one sensor (5), data regarding a measurement of a distance between a body part of the passenger and the one of the predefined locations currently illuminated by the lighting device, wherein the predefined condition is fulfilled if a value of the distance is smaller than a predefined distance value.

3. Control device (2) according to claim 1 or 2, **characterized in that** the control device (2) is configured to determine the stretching movement by receiving, from at least one camera (6), a recording of a head, face, shoulder and/or back movement of the passenger, wherein the predefined condition is fulfilled if the recorded head, face, shoulder and/or back movement corresponds to a movement towards the one of the predefined locations currently illuminated by the lighting device (3).

4. Control device (2) according to any of the preceding claims, **characterized in that** the control device (2) is further configured to:
- control at least one display (7) to illustrate stretching movements to the passenger simultaneously to each of the multiple predefined locations being sequentially illuminated in the predefined lighting sequence.

5. System (1), **characterized in that** the system comprises:
- the control device (2) according to any of claims 1 to 4;
- a lighting device (3) configured to sequentially illuminate each of the multiple predefined locations in a predefined lighting sequence; and
- a feedback device (4) for providing a visual, haptic and/or audio feedback to the passenger.

6. System (1) according to claim 5, **characterized in that** the lighting device (3) comprises LED units (3.1), each of which arranged at one of the predefined locations, wherein the LED units (3.1)
- have different shapes and/or colors for indicating different body parts to be stretched by the passenger, and/or
- are mounted behind translucent textile and/or translucent plastic.

7. System (1) according to claim 5 or 6, **characterized in that** the lighting device (3) comprises at least one light projection unit (3.2) configured to produce light projections to sequentially illuminate each of the multiple predefined locations in the predefined lighting sequence.

8. Vehicle (10), **characterized in that** the vehicle (10) comprises the control device (2) according any of claims 1 to 4 or the system (1) according any of claims 5 to 7.

9. Method (100) for assisting a stretching exercise of a passenger of a vehicle (10) using light as visual aid, **characterized in that** the method (100) comprises:
- controlling (S1) a lighting device (3) to sequentially illuminate each of multiple predefined locations in a predefined lighting sequence;
- determining (S2) a stretching movement of the passenger towards one of the predefined locations currently illuminated while each of the multiple predefined locations are sequentially illuminated in the predefined lighting sequence;
- determining (S3) whether the determined stretching movement fulfils a predefined condition; and
- controlling (S4) a feedback device (4) to provide a visual, haptic and/or audio feedback to the passenger, if the predefined condition is fulfilled.

10. A computer program and/or a computer-readable medium comprising instructions which, when executed by a computer, cause the computer to carry out the method (100) according claim 9.
